# EUROPÄISCHE PATENTSCHRIFT

(11) **EP 2 117 763 B1**
(45) Veröffentlichungstag und Bekanntmachung des Hinweises auf die Patenterteilung: **08.07.2015**
(21) Anmeldenummer: 08715451.4
(22) Anmeldetag: 06.02.2008
(51) Int. Cl.: B23K 26/36

(54) **BRUCHTRENNVERFAHREN**
FRACTURE-SPLITTING METHOD
PROCÉDÉ DE SÉPARATION PAR RUPTURE

(30) Priorität: 07.02.2007 DE 102007006806
(43) Veröffentlichungstag der Anmeldung: 18.11.2009
(73) Patentinhaber: Mauser-Werke Oberndorf Maschinenbau GmbH, 78727 Oberndorf a. N. (DE)
(72) Erfinder: GRUHLER, Siegfried, 72189 Vöhringen-Wittershausen (DE)
(74) Vertreter: Winter, Brandl, Fürniss, Hübner, Röss, Kaiser, Polte - Partnerschaft mbB
(86) Internationale Anmeldenummer: PCT/DE2008/000217
(87) Internationale Veröffentlichungsnummer: WO 2008/095476

(56) Entgegenhaltungen:
- EP-B- 0 808 228
- WO-A-03/076188
- WO-A-2006/000463
- US-A- 5 208 979
- US-A1- 2006 016 443

## Beschreibung

Die Erfindung betrifft ein Verfahren zum Einbringen von Bruchtrennkerben oder - kerbabschnitten in ein Bauteil nach dem Oberbegriff des Patentanspruches 1.

Das Dokument US 5 208 979 A offenbart ein solches Verfahren.

Zum Trennen eines Lagerauges in einen Lagerboden und einen Lagerdeckel wird in jüngster Zeit zunehmend das Bruchtrennen oder Cracken verwendet. Dabei werden in die Umfangswandungen des Lagerauges diametral zueinander angeordnete Bruchtrennkerben mittels Laserenergie eingebracht und das Lagerauge dann durch Einsetzen eines Crackdorns bruchgetrennt. Derartige Bruchtrennverfahren sind beispielsweise in der WO 2006/000463 A1 der Anmelderin beschrieben. Da die bruchgetrennten Teile, beispielsweise der Lagerdeckel und der Lagerboden nach dem Bruchtrennen wieder zusammen gesetzt werden sollen, wird in der vorgenannten Anmeldung vorgeschlagen, die Bruchtrennkerbe wellig, beispielsweise sinusförmig auszuführen, so dass die Relativpositionierung der beiden Bauteile auf einfache Weise ermöglicht ist.

In der EP 0 808 228 B1 der Anmelderin ist ein Bruchtrennverfahren beschrieben, bei dem die Bruchtrennkerbe in Art einer Perforation ausgebildet ist, die mittels eines gepulsten Lasers erzeugt wird.

Auch das Dokument US 5208979 A beschreibt ein Verfahren; in dem ein Laser dazu eingesetzt wird, Bruchtrennkerben zu erzeugen.

In der Praxis zeigte es sich, dass nach einem derartigen Verfahren hergestellte Bruchtrennkerben eine relativ umfangreiche Nachbearbeitung erfordern, bei der vor dem Fügen der bruchgetrennten Bauelemente die Bruchfläche entgratet werden muss. Des Weiteren zeigte es sich, dass bei beschichteten Bauteilen, beispielsweise Pleueln die Beschichtung verschmutzt oder beschädigt werden kann, so dass ebenfalls ein Abtragen dieser beschädigten Kantenbereiche durch Entgraten erfolgen muss.

In der Druckschrift WO 03/076188A1 ist ein Verfahren zum Einbringen einer Flächenstruktur in Druckplatten mittels Laserenergie erläutert.

Demgegenüber liegt der Erfindung die Aufgabe zugrunde, ein Verfahren zum Einbringen einer Bruchtrennkerbe oder eines Bruchtrennkerbabschnittes zu schaffen, bei dem der Aufwand für eine Nachbearbeitung verringert ist.

Diese Aufgabe wird durch ein Verfahren mit den Merkmalen des Patentanspruches 1 gelöst.

Erfindungsgemäß werden die diametral zueinander angeordneten Bruchtrennkerben oder -kerbabschnitte in einer Umfangswandung eines Lagerauges mittels Laserenergie eingebracht, wobei die Kerbe nicht durch einen Laserstrahl mit vergleichsweise großem Fokusdurchmesser ausgebildet wird, sondern es wird ein sehr fein fokussierter Laserstrahl verwendet, so dass die Kerbe durch mehrfaches Überfahren mit dem Laserstrahl gebildet werden muss. Derartige Laser mit vergleichsweise geringem Fokusdurchmesser des Laserstrahls werden beispielsweise als Beschriftungslaser eingesetzt, wobei der Laserstrahl über ein Strahlablenkungssystem ähnlich wie bei einem Scanner gesteuert wird, so dass sich die Kerbgeometrie mit hoher Präzision ausbilden lässt.

Erfindungsgemäß wird es bevorzugt, wenn ein Vanadat-Laser, beispielsweise ein Nd:YVO4(Yttrium-Vanadat)-Laser verwendet wird.

Beispielsweise bei der Bearbeitung von Pleueln oder Zylinderköpfen wird ein Laserstrahl mit einem Fokusdurchmesser von weniger als 60 µm, vorzugsweise etwa 20 µm verwendet Derartige Beschriftungslaser lassen sich sehr einfach derart ansteuern, so dass die Umfangskanten der Kerbe abgetragen werden können und ein nachfolgendes Entgraten nicht erforderlich ist.

Die erfindungsgemäße Technologie lässt sich besonders vorteilhaft bei beschichteten Werkstücken, beispielsweise mit einer Kupferlegierung versehenen Pleueln einsetzen.

Sonstige vorteilhafte Weiterbildungen der Erfindung sind Gegenstand weiterer Unteransprüche.

Im Folgenden wird ein bevorzugtes Ausführungsbeispiel anhand einer schematischen Zeichnung näher erläutert.

Bei Hochleistungsmotoren für PKW oder LKW werden häufig Pleuel mit einem beschichteten großen Pleuelauge verwendet. Dabei wird eine Kupferlegierung beispielsweise durch Plasmaspritzen auf die Innenumfangsfläche des großen Pleuelauges aufgetragen. Bei herkömmlichen Bruchtrennverfahren werden in diese Innenumfangsfläche des großen Pleuelauges zwei diametral angeordnete Bruchtrennkerben eingebracht, die beispielsweise durchgehend oder in Form einer Perforation ausgebildet sein können. Hinsichtlich Einzelheiten sei auf die eingangs genannte EP 0 806 228 B1 der Anmelderin verwiesen. Insbesondere bei beschichteten Pleueln war dabei allerdings eine erhebliche Nachbearbeitung erforderlich; um verschmutzte oder beschädigte Beschichtungsabschnitte abzutragen. Dieser Nachteil wird dadurch überwunden, dass anstelle eines Laserstrahls mit vergleichsweise großem Fokusdurchmesser ein sehr feiner Laserstrahl mit geringem Fokusdurchmesser verwendet wird. Laser mit derartigen Anforderungen werden beispielsweise als Beschriftungslaser eingesetzt, bei denen der Laserstrahl über ein Strahlablenksystem gesteuert wird. Als besonders geeignet haben sich gepulste Vanadat-Laser herausgestellt, die sich mit hoher Strahlqualität ansteuern lassen. Die Ansteuerung kann beispielsweise nach dem Q-Switch-Verfahren erfolgen, wobei eine Güteschaltung mittels eines optischen Bausteins erfolgt, so dass sich sehr starke Laserimpulse erzeugen lassen. Derartige Laser sind bekannt, so dass weitere Erläuterungen entbehrlich sind.

Erfindungsgemäß wird mittels eines derartigen Lasers durch mehrfaches Überfahren des Bauteils und durch entsprechende Ansteuerung des Strahlablenkungssystems eine qualitativ hochwertige, regelmäßige Bruchtrennkerbe oder Bruchtrennkerbabschnitte ausgebildet. Dabei wird das Strahlablenkungssystem beispielsweise so angesteuert, dass die Umfangskantenbereiche der Bruchtrennkerbe abschließend überfahren werden, so dass in diesen Kantenbereichen ein geringfügiger Materialabtrag und somit eine Abreinigung der Kantenbereiche erfolgt, so dass beschädigte oder verschmutzte Beschichtungsbereiche entfernt werden und somit einem Abblättern der Beschichtung im Gebrauch vorgebeugt wird.

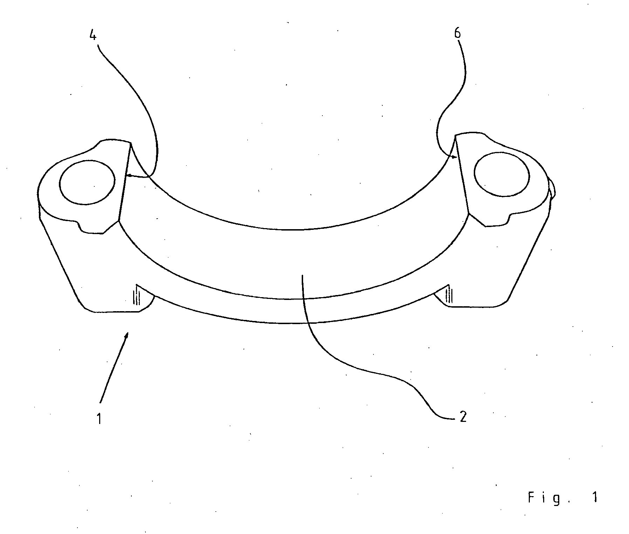

Die einzige Figur zeigt eine dreidimensionale Ansicht eines Lagerdeckels 1 eines bruchgetrennten großen Pleuelauges, dessen Innenumfangsfläche mit einer Beschichtung 2 versehen ist. Der Verlauf der Bruchtrennebene ist durch Bruchtrennkerben 4, 6 vorgegeben, die einander diametral gegenüberliegend an der Innenumfangswandung des Pleuelauges ausgebildet werden. Erfindungsgemäß werden die im Querschnitt etwa V-förmig oder konisch zulaufenden Bruchtrennkerben durch mehrfaches Überfahren der entsprechenden Bereiche der Innenumfangswandung ausgebildet. Durch die präzise Ansteuerung des Strahlablenkungssystems lässt sich somit eine Bruchtrennkerbe mit exzellenter Qualität herstellen, wobei die Kantenbereiche, d.h. insbesondere die Bereiche, entlang denen die Beschichtung 2 ausgebildet ist, abgereinigt werden, so dass praktisch ein "Entgraten" mittels Laserstrahl erfolgt. Da bei derartigen Beschriftungslasern relativ wenig Energie in den Bereich der Bruchtrennkerbe eingetragen wird, können unerwünschte Gefügeumwandlungen im Bruchtrennebenenbereich ausgeschlossen werden. Des Weiteren wird einer Beschädigung oder Verschmutzung der Beschichtung vorgebeugt. Bei derartig eingebrachten Bruchtrennkerben kann auf ein Schleifen und Entgraten der Bruchtrennflächen nach dem Crackvorgang verzichtet werden.

Selbstverständlich ist es das erfindungsgemäße Verfahren nicht auf die Bearbeitung von beschichteten Bauteilen, insbesondere Pleueln beschränkt, sondern es lassen sich praktisch bei beliebigen Bauteilen, die mittels eines Crackverfahrens bruchgetrennt werden sollen, Bruchtrennkerben ausbilden.

Das erfindungsgemäße Verfahren lässt sich mit minimalem vorrichtungstechnischen Aufwand realisieren, da geeignete Beschriftungslaser mit präzise und schnell ansteuerbarem Strahlablenkungssystem auf dem Markt erhältlich sind. Ein weiterer Vorteil derartiger Lasersysteme besteht darin, dass diese sich mit minimalem Aufwand umprogrammieren lassen, um die Kerbgeometrie zu verändern oder die Bearbeitung anderer Bauteilgeometrien zu ermöglichen.

Offenbart ist ein Verfahren zum Einbringen von Bruchtrennkerben oder Bruchtrennkerbabschnitten in ein Bauteil, wobei die Bruchtrennkerbe durch mehrfaches Überfahren mittels eines Laserstrahls ausgebildet wird.

## Patentansprüche

1. Verfahren zum Einbringen von diametral zueinander angeordneten Bruchtrennkerben oder Bruchtrennkerbabschnitten in einer Umfangswandung eines Lagerauges eines bruchzutrennenden Bauteils, wobei die Bruchtrennebene durch die Bruchtrennkerben (4, 6) oder Bruchtrennkerbabschnitte vorgegeben ist, **dadurch gekennzeichnet, dass** der Fokusdurchmesser des Laserstrahls wesentlich kleiner als die Breite der Bruchtrennkerbe (4, 6) oder des Bruchtrennkerbabschnittes ist, so dass deren Kontur durch mehrfaches Überfahren des Bauteils durch den Laserstrahl ausgebildet wird, wobei der Fokusdurchmesser des Laserstrahls kleiner als 60 µm, vorzugsweise etwa 20 µm ist.

2. Verfahren nach Patentanspruch 1, wobei der Laser ein Vanadat-Laser ist.

3. Verfahren nach Patentanspruch 1 oder 2, wobei der Fokusdurchmesser des Laserstrahls kleiner 60 µm, vorzugsweise etwa 20 µm ist.

4. Verfahren nach einem der vorhergehenden Patentansprüche, wobei Umfangskantenbereiche der Bruchtrennkerbe (4, 6) oder des Bruchtrennkerbabschnittes durch Ansteuern des Lasers nachbearbeitet oder abgereinigt werden.

5. Verfahren nach einem der vorhergehenden Patentansprüche, wobei das Bauteil mit einer Beschichtung (2) versehen ist.

6. Verfahren nach Patentanspruch 5, wobei das Bauteil ein beschichtetes Pleuel ist.

## Claims

1. Method for introducing diametrically arranged fracture-splitting notches or fracture-splitting notch portions in a circumferential wall of a bearing eye of a component that is to be fracture-split, wherein the fracture-splitting plane is given by the fracture-splitting notches (4, 6) or fracture-splitting notch portions, **characterised in that** the focus diameter of the laser beam is substantially smaller than the width of the fracture-splitting notch (4, 6) or of the fracture-splitting notch portion, so that the contour thereof is formed by repeatedly passing the component through the laser beam, wherein the focus diameter of the laser beam is smaller than 60 µm, preferably approximately 20 µm.

2. Method according to patent claim 1, wherein the laser is a vanadate laser.

3. Method according to patent claim 1 or 2, wherein the focus diameter of the laser beam is smaller than 60 µm, preferably approximately 20 µm.

4. Method according to any one of the preceding patent claims, wherein circumferential edge regions of the fracture-splitting notch (4, 6) or of the fracture-splitting notch portion are reworked or cleaned by activation of the laser.

5. Method according to any one of the preceding patent claims, wherein the component is provided with a coating (2).

6. Method according to patent claim 5, wherein the component is a coated connecting rod.

## Revendications

1. Procédé d'introduction d'encoches de séparation par rupture ou sections d'encoche de séparation par rupture agencées diamétralement l'une par rapport à l'autre dans une paroi périphérique d'un oeil de palier d'un composant à séparer par rupture, le plan de séparation par rupture étant prescrit par les encoches de séparation par rupture (4, 6) ou sections d'encoche de séparation par rupture, **caractérisé en ce que** le diamètre de foyer du rayon laser est sensiblement inférieur à la largeur de l'encoche de séparation par rupture (4, 6) ou de la section d'encoche de séparation par rupture de sorte que leur contour soit réalisé par passage multiple du rayon laser sur le composant, le diamètre de foyer du rayon laser étant inférieur à 60 µm, de préférence s'élevant à environ 20 µm.

2. Procédé selon la revendication 1, le laser étant un laser au vanadate.

3. Procédé selon la revendication 1 ou 2, le diamètre de foyer du rayon laser étant inférieur à 60 µm, de préférence s'élevant à environ 20 µm.

4. Procédé selon l'une quelconque des revendications précédentes, des zones de bord périphérique de l'encoche de séparation par rupture (4, 6) ou de la section d'encoche de séparation par rupture étant réusinées ou nettoyées par commande du laser.

5. Procédé selon l'une quelconque des revendications précédentes, le composant étant pourvu d'un revêtement (2).

6. Procédé selon la revendication 5, le composant étant une bielle revêtue.
